# EUROPÄISCHE PATENTSCHRIFT

(11) **EP 1 330 611 B1**
(45) Veröffentlichungstag und Bekanntmachung des Hinweises auf die Patenterteilung: **29.09.2004**
(21) Anmeldenummer: 01992841.5
(22) Anmeldetag: 30.10.2001
(51) Int. Cl.: F16C 29/04, A47B 9/20

(54) **TELESKOPARM**
TELESCOPIC ARM
BRAS TELESCOPIQUE

(30) Priorität: 02.11.2000 DE 10054236
(43) Veröffentlichungstag der Anmeldung: 30.07.2003
(73) Patentinhaber: Okin Gesellschaft für Antriebstechnik MbH & Co. KG, 51645 Gummersbach (DE)
(72) Erfinder: NIJSEN, Andreas, Jacobus, Louis, NL-7521 AT Enschede (NL); KOCH, Dietmar, 51645 Gummersbach (DE)
(74) Vertreter: Gudat, Axel, Dr.
(86) Internationale Anmeldenummer: PCT/DE2001/004054
(87) Internationale Veröffentlichungsnummer: WO 2002/036975

(56) Entgegenhaltungen:
- EP-A- 0 376 414
- WO-A-93/03650
- CH-A- 450 655
- DE-A- 4 142 346
- DE-A- 19 623 437
- FR-A- 1 278 851

## Beschreibung

Die Erfindung betrifft einen Teleskoparm mit einem äußeren und mindestens einem inneren zueinander teleskopierbaren Gestängeteil gemäß dem Oberbegriff von Anspruch 1.

Teleskoparme sind für vielfältige Anwendungszwecke bekannt. Insbesondere werden derartige Teleskoparme bei höhenverstellbaren Möbeln oder Möbelteilen, beispielsweise höhenverstellbaren Tischen, Pulten oder dergleichen oder bei anderen höhenverstellbaren oder seitlich verschiebbaren Einrichtungen verwendet. Teleskoparme kommen aber auch in anderen Gebieten zum Einsatz, beispielsweise im Maschinenbau.

Es sind Teleskoparme bekannt, bei welchen das äußere Gestängeteil ein Rohrabschnitt mit im Wesentlichen rechteckigem Querschnitt darstellt, zu dem koaxial ein Rohrabschnitt mit annähernd ovalem Querschnitt angeordnet ist. Als Rolllager zwischen den beiden teleskopierbaren Gestängeteilen sind Kugeln vorgesehen, die auf der Innenfläche des äußeren Gestängeteils und den abgerundeten Außenflächen des inneren Gestängeteils ablaufen. Bei derartigen Teleskoparmen hat es sich als nachteilig erwiesen, dass diese eine für bestimmte Anwendungszwecke nicht ausreichende Querstabilität aufweisen, da bei seitlichen Krafteinwirkungen, die ein gewisses Ausmaß übersteigen, undefinierte Deformationen der Kugellaufflächen insbesondere an dem inneren Gestängeteil resultieren. Bei diesen Deformationen werden auch die zu den Kugellaufflächen benachbarten Bereiche unkontrollierbar deformiert, wodurch ein unerwünschtes und nicht definiertes Spiel zwischen den teleskopierbaren Gestängeteilen auftritt.

Für bestimmte Anwendungszwecke von Teleskoparmen, insbesondere auch im Möbelbereich wie beispielsweise bei längenveränderlichen Tisch- bzw. Pultbeinen ist jedoch eine hohe Seitenstabilität aber auch Torsionsstabilität erforderlich. Zwar kann zur Erhöhung der Seitenstabilität die Wandstärke der Gestängeteile erhöht werden, dies führt jedoch zu zusätzlichem Gewicht und Herstellungskosten. Ferner soll der Teleskoparm zugleich mit möglichst geringem Kraftaufwand teleskopierbar sein.

Aus der CH-A-450 655 ist ein Teleskoparm mit einem inneren und einem äußeren zueinander teleskopierbaren Gestängeteil und einer zwischen den beiden Gestängeteilen vorgesehenen Kugelanordnung, die als Rolllager zwischen den Gestängeteilen wirkt, bekannt, wobei das äußere und das innere Gestängeteil eine Längsnut zur Führung mindestens einer Kugel der Kugelanordnung aufweisen.

Die FR 1,287,851 beschreibt einen Teleskoparm mit einem äußeren und inneren Gestängeteil, wobei das innere Gestängeteil ein Rundrohr ist und die Kugeln der zwischen den Gestängeteilen angeordneten Kugelanordnung zumindest in dem inneren Gestängeteil in Rillen geführt sind.

Die DE 196 23 437 A1 beschreibt einen gattungsgemäßen Teleskoparm mit einem polygonalen Außenrohr und einer Kugelanordnung mit mindestens drei Laufkugeln, die in verschiedenen Ecken des Außenrohres abrollen. Das Innenrohr weist in den Umfangsbereichen, in denen die Laufkugeln abrollen, einen konvexgerundeten Querschnitt auf. Die Laufkugeln sind so dimensioniert, dass sie beim Einlaufen die Oberfläche des Innenrohres plastisch verformen und sich dadurch Führungsrillen schaffen.

Der Erfindung liegt somit die Aufgabe zugrunde, einen gattungsgemäßen Teleskoparm dahingehend weiterzubilden, dass er bei geringem Gewicht und niedrigen Herstellungskosten eine erhöhte Seiten- und Torsionsstabilität aufweist und mit geringem Kraftaufwand teleskopierbar ist.

Die Aufgabe wird erfindungsgemäß durch einen Teleskoparm mit den Merkmalen des kennzeichnenden Teils des Anspruchs 1 gelöst.

Zumindest eine Kugel, vorzugsweise zumindest eine Kugel je Gestängeteil, besonders bevorzugt sämtliche Kugeln, die einem Gestängeteil zugeordnet sind oder insbesondere sämtliche Kugeln des Teleskoparmes, weisen somit bezogen auf ihre Sollposition in dem demontierten Zustand des Teleskoparmes ein geringes Ü-bermaß auf und erfindungsgemäß bringen bzw. prägen durch zumindest die erste oder auch durch eine geringe Anzahl (beispielsweise 2 bis 5, ohne hierauf beschränkt zu sein) weiterer Teleskopbewegungen Laufrillen (nachfolgend auch "Laufflächen "oder" "Laufspuren" genannt) in mindestens eines der zueinander teleskopierbaren Gestängeteile ein, d.h. in den inneren und/oder äußeren Gestängeteil. Hierdurch schaffen sich die Laufkugeln im Wesentlichen ihre eigenen Laufflächen, wodurch die Herstellung des Teleskoparmes wesentlich erleichtert wird und dieser eine besonders hohe Seiten- und Torsionsstabilität aufweist. Bei weiteren Teleskopbewegungen, wenn die Laufrillen eingeprägt sind, stellt sich. dann ein praktisch konstanter Reibungswiderstand bei der Teleskopbewegung ein. Vorteilhafterweise sind der Kugeldurchmesser der einen oder mehreren der oben genannten Kugel und die diese Kugel umgebenden radial innen und außen liegenden Gestängeteile, die die Kugel somit umgeben, derart ausgebildet, dass die Kugel sowohl in dem inneren als auch in dem äußeren Gestängeteil sich zumindest eine Laufrille bei der ersten oder in bei einigen wenigen weiteren Teleskopbewegungen selber einprägt. Vorzugsweise prägt sich die jeweilige Kugel in dem inneren oder dem äußeren, besonders bevorzugt in dem inneren und äußeren Gestängeteil, jeweils zwei oder mehr Laufrillen bei dem Einlaufvorgang in der oben beschriebenen Weise ein, wobei sich die Kugel in dem jeweils anderen Gestängeteil, das das innere oder äußere Gestängeteil sein kann, mindestens eine Laufrille selber einprägt. Hierzu kann die Kugel beispielsweise von insgesamt drei Nutflanken oder Gestängeseitenwänden umgeben sein Vorzugsweise prägen sich sämtliche Kugeln eines zugeordneten Gestängepaares von innerem und äußerem Gestängeteil , vorzugsweise sämtliche Kugeln des Teleskoparmes in beiden jeweils zugeordneten Gestängeteilen jeweils zumindest zwei Laufrillen selber ein.

Der in dem vorstehenden Absatz beschriebenen Einprägung und Anordnung der Kugeln beim Einlaufvorgang kommt erfindungsgemäß im Zusammenhang mit die Kugeln teilweise umgebenden Nuten besonderer Bedeutung zu, da durch die Nuten bereits beim Einlaufvorgang der Kugeln eine definierte Führung für diese gegeben ist. Als Nut wird hierbei sowohl eine die Kugel an dem Teleskoparm radial innen umgebende Nut als auch eine radial außen umgebende Nut angesehen, die auch durch die aneinanderstoßenden Seitenwände eines mehreckigen Gestängeteils bereitgestellt werden kann. Die oben genannten Ausführungsformen der Teleskoparme beziehen sich daher vorzugsweise jeweils auf einen Teleskoparm, bei dem die jeweilige Kugel, mehrere Kugeln oder vorzugsweise sämtliche Kugeln von dem jeweils zugeordneten inneren oder äußeren Gestängeteil, vorzugsweise von dem inneren und äußeren Gestängeteil, in Führungsnuten geführt sind, so dass sich die Laufrillen in die inneren und/oder äußeren Führungsnuten (auch Längsnuten genannt) einprägen. Vorzugsweise wird in mit Kugeln bestückten Führungsnuten in jeweils eine Nutflanke der Nut des inneren und/oder äußeren Gestängeteils zwei oder mehr Laufrillen eingeprägt. Vorzugsweise weist jedes Gestängeteil mehr als zwei lateral beabstandete, wie oben ausgeführt ausgebildete Führungsnuten auf, die vorzugsweise zumindest zwei oder in sämtlichen Eckbereichen von Gestängeteilen mit mehreckigen Querschnittsprofilen, besonders bevorzugt in diametral einander gegenüberliegenden Führungsnuten angeordnet und mit jeweils mindestens einer Kugel bestückt sind. Bei Gestängeteilen mit drei-, vier- oder mehreckigem Querschnitt können somit in zwei, vorzugsweise in allen Ecken mit Kugeln bestückte Führungsnuten angeordnet sein. Ferner gelten die obigen Ausführungen zu der Anordnung der Kugellaufflächen insbesondere auch für von den Kugeln selber eingeprägte Laufflächen.

Weist zumindest das innere Gestängeteil eine Längsnut auf, die mindestens eine Kugel der Kugelanordnung teilumfänglich umgibt und als Kugelführung dient, so wird die Kugel auch nach einer Deformation der Kugellauffläche oder eines benachbarten Bereichs des Gestängeteils von der Nut teilumfänglich umgeben, so dass noch eine definierte Führung der Kugel möglich ist. Des Weiteren wird durch die die Kugel teilumfänglich umgebende, bezogen auf den Kugelmittelpunkt konvex gekrümmte Nut ein Profil bereitgestellt, das gegen Krafteinwirkungen senkrecht zur Nutöffnung vergleichsweise deformationsstabil ist.

Vorzugsweise ist das jeweils innere Gestängeteil mit mehreren um den Umfang verteilten Kugelanordnungen versehen, so dass das Gestängeteil in allen Richtungen senkrecht zu dessen Längserstreckung über die Kugeln Kräfte auffangen kann. Hierbei können sämtliche einem bzw. allen Gestängeteil(en) zugeordnete Kugeln in Längsnuten, die die jeweiligen Kugeln teilumfänglich umgeben und als Kugelführung ausgebildet sind, geführt sein. Es können jedoch gegebenenfalls auch nur einige der Kugeln entsprechenden Längsnuten zugeordnet sein.

Die Längsnuten des inneren Gestängeteils erstrecken sich vorzugsweise linear, sie können gegebenenfalls jedoch auch bogenförmig, beispielsweise spiralförmig ausgeführt sein.

Als besonders vorteilhaft hat es sich erwiesen, wenn in der Längsnut des zumindest einen inneren Gestängeteils zumindest einer oder sämtlicher Kugeln zwei oder mehr lateral beabstandete Kugellaufflächen zugeordnet sind, die vorzugsweise parallel zur Längserstreckung der zugeordneten Nut verlaufen. Durch die laterale Beabstandung der Laufflächen können seitliche Kräfte auf den Teleskoparm besser von der Nut aufgefangen werden. Des Weitern kann durch den lateralen Abstand der Laufflächen das Verhältnis der Bewegungen benachbarter Gestängeteile zueinander zu der gekoppelten Bewegung der entsprechenden Kugeln eingestellt werden. Unter Laufflächen seien hier allgemein jegliche Kontaktbereiche des Gestängeteils mit der Kugel zur Führung derselben verstanden, die beispielsweise rillenförmig ausgeführt und eine mehr oder weniger große Breite haben können.

Zusätzlich oder alternativ kann die Innenseite des bezogen auf eine Kugelanordnung jeweils äußeren Gestängeteils mindestens eine Kugel teilumfänglich umgeben, wobei vorzugsweise zwei oder mehr lateral beabstandete Laufspuren für die jeweilige Kugel bereitgestellt werden.

Anzahl und Abstand der Laufspuren des jeweils inneren und äußeren Gestängeteils können an die jeweils aufzufangenden seitlichen Kräfte und Bewegungsverhältnisse der Gestängeteile und zugeordneten Kugelanordnungen angepasst sein.

Die Längsnut an dem jeweils inneren und/oder äußeren Gestängeteil kann die jeweils zugeordnete(n) Kugel(n) über einen Winkel von mehr als 20 oder mehr als 40 Grad umgeben, um eine ausreichend definierte Kugelführung zu geben. Vorzugsweise umgibt die Nut die jeweilige(n) Kugel(n) um ca. 50 bis ca. 140 Grad oder mehr, besonders bevorzugt um ca. 70 bis 90 Grad. Die Nut ist hierbei zum Kugelmittelpunkt hin konkav gekrümmt oder die im Wesentlichen ebenen Nutflanken verlaufen entsprechend geneigt, die Nut weist vorzugsweise über diesen Winkelbereich eine Querschnittskrümmung auf, die im Wesentlichen der Kugelkrümmung entspricht, d.h. der Nut-Kugel-Abstand beträgt in diesem Bereich weniger als ca. 1/4 oder weniger als 1/10, vorzugsweise weniger als 2/100 bis 2/1000 oder weniger als der Kugeldurchmesser. Ein nutartiger Bereich kann hierbei auch an dem jeweils inneren und/oder äußeren Gestängeteil durch lateral beabstandete Kugellaufflächen ausgebildet werden, unabhängig davon, wie die sonstige Geometrie des oder der mit den Kugelführungen versehenen Bauteile ausgeführt ist. Die jeweils einer Kugel zugeordneten lateral beabstandeten Kugellaufflächen eines Gestängeteils schließen somit vorzugsweise einen Winkelumfang der geführten Kugel von ca. 50 bis ca. 140 Grad, besonders bevorzugt bevorzugt von ca. 70 bis ca. 90 Grad ein, ohne hierauf beschränkt zu sein. Vorzugsweise sind über die genannten Umfangswinkel lediglich zwei Laufspuren vorgesehen, es können jedoch auch mehrere vorzugsweise gleichmäßig beabstandete Laufspuren vorgesehen sein. Die genannten Winkelbereiche haben sich als günstig erwiesen, um sowohl eine hohe Seitenstabilität des Teleskoparmes zu bewirken als auch um eine für viele Anwendungszwecke zweckmäßiges Verhältnis von Verschiebungsbewegung benachbarter Gestängeteile zueinander in Bezug auf die resultierende Verschiebungsbewegung der Kugeln zu bewirken.

Die Kugellaufflächen an Vorder- und Rückseite der Kugel bei zumindest einer oder sämtlicher Kugeln schließen mit dem Kugelmittelpunkt vorzugsweise einen Winkel von 140 bis 220, vorzugsweise 160 bis 200, besonders bevorzugt 180 Grad ein.

Die Kugellaufflächen zumindest einer Kugel sind vorzugsweise jeweils in etwa auf Höhe zumindest eines der Wendepunkte bzw. zumindest eines der Endpunkte der im Wesentlichen geradlinigen Abschnitte der sich an die jeweilige Nut anschließenden Seitenwände der Gestängeteile angeordnet.

Die Breite der Kugellaufflächen bei bestimmungsgemäßen Betrieb des Teleskoparmes, d. h. nach einer gegebenenfalls notwendigen Einlaufphase aber ohne Abnutzungserscheinungen der Laufflächen, kann ca. 1 bis 15 %, vorzugsweise ca. 3 bis 6 % des Kugelumfangs betragen. Bei einem Kugeldurchmesser von 10 mm weisen die Kugellaufflächen somit vorzugsweise eine Breite von ca. 1 bis 2 mm auf.

Sind zumindest drei oder mehr zueinander teleskopierbare Gestängeteile vorgesehen, die in radialer Richtung zwei oder mehrere nutartige Kugelführungen aufweisen, so liegen vorzugsweise die Verbindungsachsen der Kugelmittelpunkte von in den Führungen geführter bzw. führbarer Kugeln bzw. deren Verlängerungen außerhalb des Mittelpunktes des Teleskoparmes, der als dessen geometrischer Mittelpunkt oder Schwerpunkt definiert sein kann. Durch diese Geometrie kann ein maximaler Querschnitt der Gestängeteile und damit eine maximale Seitenstabilität des Teleskoparmes erzielt werden. Die in radialer Richtung hintereinander angeordneten Kugelführungen können unmittelbar aufeinander folgen, d. h. lediglich durch die Gestängeteilwandungen selber getrennt sein, sie können auch jeweils durch mehrere Gestängeteile voneinander getrennt sein. Sämtliche in den nutartigen Kugelführungen angeordneten Kugeln des Teleskoparmes können den gleichen Durchmesser aufweisen, zwischen jeweils unterschiedlichen Gestängeteilen angeordnete Kugeln können auch unterschiedliche Durchmesser aufweisen.

Vorzugsweise, insbesondere wenn drei oder mehr Gestängeteile vorgesehen sind, können diese einen im Wesentlichen mehreckigen, beispielsweise unter Idealisierung der Gestängegeometrien in den Nutbereichen einen drei, vier, fünf oder mehreckigen Profilquerschnitt aufweisen, wobei die Führungsnuten mit Kugellaufflächen vorzugsweise in den Eckbereichen der Profile angeordnet sind. Die Querschnitte können jedoch auch einen anderen, beispielsweise runden, elliptischen, ovalen oder anders gekrümmten Querschnitt aufweisen.

Insbesondere können bei in radialer Richtung beabstandeten, vorzugsweise lediglich durch Gestängewandungen getrennte Kugeln, diesen Kugeln zugeordnete Kugellaufflächen im Wesentlichen auf der Verbindungslinie der Kugelmittelpunkte liegen, insbesondere auf einer exakt oder im Wesentlichen geraden Linie. Vorzugsweise liegen in radialer Richtung bezogen auf die jeweilige Kugel sowohl eine vordere als auch eine hintere Kugellauffläche auf der Verbindungslinie der Kugeln. Besonders bevorzugt sind sämtlichen Kugeln jeweils eine vordere und hintere Lauffläche zugeordnet, die auf der Verbindungslinie der zwei oder mehr Kugeln liegen. Hierdurch können seitliche Kräfte über die Kugeln in radialer Richtung aufgefangen werden, so dass ein Teleskoparm hoher Steifigkeit resultiert. Die Abweichung der Kugellaufflächen in Umfangsrichtung der Kugel von der Verbindungslinie mehrerer Kugeln kann 20 Grad oder weniger, vorzugsweise 0 bis 10 Grad oder weniger betragen, ohne auf diese Werte beschränkt zu sein.

Besonders hohe seitliche Kräfte können definiert von dem Teleskoparm ohne Erzeugen eines unerwünschten Spiels der Arme aufgefangen werden, wenn an dem jeweils äußeren und/oder inneren Gestängeteil zwischen lateral benachbarten Laufflächen für die mindestens eine Kugel der mindestens einen Kugelanordnung ein Bereich mit einen Spalt zwischen der kugel und dem Bereich bildendem größerem radialen Abstand zur Kugel vorgesehen ist, der als Widerlager für die Kugel in Art eines Überlastschutzes dient.

Bei seitlichen Kräften, die eine Deformation der Gestängeteile im Bereich der Kugellaufflächen bewirken, kann somit die Kugel von einem benachbarten, vorher nicht als Kugellauffläche dienendem Bereich aufgefangen werden. Der Widerlagerbereich ist vorzugsweise mittig zwischen benachbarten Laufflächen vorgesehen und weist vorzugsweise einen radialen Abstand zu der Kugeloberfläche in deren bestimmungsgemäßer Position von 0,25 bis 5 %, vorzugsweise 0,5 bis 5 %, besonders bevorzugt 1 bis 2 % bezogen auf den Kugeldurchmesser auf. Bei einem Kugeldurchmesser von 10 mm kann der radiale Abstand des Widerlagerbereichs zu der Kugeloberfläche somit vorzugsweise 0,1 bis 0,2 mm betragen. Dieser Abstand kann sich auf den Bereich größter Tiefe des Widerlagerbereichs oder auf den äußeren Randbereich des Widerlagers beziehen. In Abhängigkeit von der erforderlichen Seitenstabilität und der jeweiligen Materialwahl können gegebenenfalls auch andere als die genannten Werte realisiert werden.

Die Verbindungslinie des zwischen benachbarten Kugellaufflächen angeordneten Überlast-Widerlagerbereichs zu dem jeweiligen Kugelmittelpunkt liegt vorzugsweise außerhalb des Umfangs der in radialer Richtung nachfolgenden Kugel so dass auch bei Deformation eines Gestängeteils im Bereich einer Kugelführung die radial beabstandeten Kugelführungen nicht unmittelbar betroffen sind.

Der Teleskoparm ist vorzugsweise derart ausgeführt, dass mindestens ein Gestängeteil aus einem Blech oder Rohrstück gefertigt ist, wobei an dem Gestängeteil eine Nut in Form einer Einprägung des Bleches oder Rohrstückes vorgesehen ist. Diese Einprägung kann beispielsweise durch Herstellung des Rohrstückes im Stranggussverfahren oder in verwandten Herstellungsverfahren hergestellt sein. Besonders vorteilhaft ist es, das Gestängeteil in einem Walzverfahren mit anschließender Längsnahtverbindung aus einem Blech zu fertigen, wodurch besonders scharfe Innenkanten und abgerundete Außenkanten, die beispielsweise Nutbegrenzungskanten darstellen können, erzielbar sind. Durch die Einprägung des Bleches oder Rohrstückes wird auf der Innenseite des resultierenden Gestängeteils eine korrespondierende Ausbauchung erzeugt, die beispielsweise als Führungsfläche für eine innenliegende Kugel, die einem innenliegenden Gestängeteil zugeordnet ist, ausgeführt sein kann. Das Gestängeteil kann insbesondere im Nutbereich die gleiche Materialstärke aufweisen wie in den angrenzenden Seitenwandbereichen der Gestängeteile. Vorzugsweise erfolgt die Einprägung der Nut in das Blech bzw. Rohrstück derart, dass die nutseitige Außen- bzw. Innenfläche des Gestängeteils unmittelbar oder mit nur geringfügiger Bearbeitung, beispielsweise rillenartige Vorformung einer Kugellauffläche, unmittelbar zur Montage des Teleskoparmes verwendbar ist.

Die Hohlprofilbereiche der Gestängeteile können gegebenenfalls über den Umfang verteilt Bereiche unterschiedlicher Wandstärke aufweisen. Insbesondere können im Bereich der Nuten größere Wandstärken realisiert sein, als in angrenzenden Bereichen. Die Geometrie des Inneren des Hohlprofils kann sich somit von der Geometrie der Außenseite des Hohlprofils unterscheiden, wobei auch in diesem Falle die Innenwände des Hohlprofils als Führungsbereiche für Laufkugeln ausgebildet sein können. Durch entsprechende Gestaltung der Innenwände des Hohlprofils kann erreicht werden, dass Gestängeteile unterschiedlicher Geometrie oder im Wesentlichen gleicher Geometrie um deren Längsachse verdreht unter Realisierung von Kugelführungen ineinandersteckbar sind.

Die Wandstärke der in radialer Richtung aufeinanderfolgenden Gestängeteile kann in radialer Richtung nach Innen zunehmen, wobei gegebenenfalls aufeinander folgende Gestängeteile auch im Wesentlichen die gleiche Wandstärke aufweisen können.

Die einzelnen Gestängeteile können jeweils mehrere lateral und/oder axial beabstandete Führungsbereiche aufweisen, die einer gegebenen Kugelanordnung zugeordnet sind. Es können hierbei mehrere oder sämtliche der Führungsbereiche mit Kugeln versehen werden oder aber nur einige der Führungsbereiche mit Kugeln bestückt werden. Insbesondere können die Führungsbereiche sowie die zueinander teleskopierbaren Gestängeteile derart ausgeführt sein, dass die Gestängeteile in verschiedenen um deren Längsachsen gedrehten Positionen zusammensteckbar sind, um einen Teleskoparm zu ergeben. Hierbei kann bei einer gegebenen Geometrie der Gestängeteile der Teleskoparm auf einfache Weise an unterschiedliche Stabilitätsanforderungen angepasst werden. Unter einer Kugelanordnung, die auch nur eine Kugel umfassen kann, ist hierbei eine Anordnung verstanden, bei der die Kugeln innerhalb einer gegebenen Anordnung einen kleineren Abstand aufweisen als zu einer benachbarten Anordnung. Die Kugelanordnungen können insbesondere jeweils mehrere in lateraler und/oder axialer Richtung beabstandete Kugeln aufweisen. Es können so in den Ecken von Mehreckprofilen oder über den Gestängeteilumfang verteilt Gruppen lateral beabstandeter Nute angeordnet sein, die innerhalb der Gruppen unmittelbar oder geringfügig beabstandet sein können, wobei zwischen den Gruppen ein größerer Abstand gegeben ist. Insbesondere können in einem Eckbereich eines Mehreckprofils jeweils unterschiedlichen Seitenwänden separate Nute zugeordnet sein.

Weist der Teleskoparm drei teleskopierbare Gestängeteile auf, so können einige oder alle Kugeln zwischen dem äußeren und dem radial weiter innen liegenden (mittleren) Gestängeteil und/oder zwischen dem mittleren und dem radial innenliegenden Gestängeteil so ausgeführt sein, dass diese bei Teleskopierbewegungen der Gestängeteile Einlaufrillen in den Führungsnuten erzeugen.

Die Einlaufbewegung der Kugeln wird erleichtert, wenn die Laufrillen in demontiertem Zustand des Teleskoparmes vorgearbeitet sind, also noch nicht die endgültige Geometrie insbesondere Rillentiefe, aufweisen, so dass aufgrund des Übermaßes des zwischen den Gestängeteilen angebrachten Laufkugeln die endgültigen Laufflächen geschaffen werden.

Eine hohe Stabilität des Teleskoparmes ist gegeben, wenn zumindest ein oder sämtliche der inneren Gestängeteil im Wesentlichen ein Mehreckprofil darstellen und die mindestens eine Längsnut im Eckbereich zumindest eines oder sämtlicher Profile vorgesehen ist. Vorteilhafterweise sind sämtliche Eckbereiche eines oder aller inneren Gestängeteile mit entsprechenden Führungsnuten versehen.

Die Nuten können derart ausgebildet sein, dass eine oder beide der benachbarten Seitenflächen des Mehreckprofils, die die jeweilige Nut einschließen, zumindest im Wesentlichen auf den Kugelmittelpunkt der in der Nut zu führenden Kugel gerichtet sind. Hierdurch können die Kugeln bei seitlich einwirkenden Kräften durch die angrenzenden Seitenflächen der Mehreckprofile besonders effektiv abgestützt werden. Vorteilhafterweise sind die Kugellaufflächen unmittelbar benachbart einer oder beiden der angrenzenden Seitenflächen des Mehreckprofils benachbart angeordnet.

Vorteilhafterweise weisen alle Gestängeteile des Teleskoparmes im Wesentlichen einen mehreckigen Querschnitt auf, in den die Längsnuten eingebracht sind. Jeweils zwei, drei oder mehr aufeinander folgende Gestängeteile können hierbei im Wesentlichen - bis auf die ein Ineinanderstecken der Gestängeteile ermöglichenden Dimensionierung - die gleiche Querschnittsgestalt aufweisen. Insbesondere können aufeinander folgende oder sämtliche Gestängeteile eines Teleskoparmes einen gleich- oder ungleichseitigen drei-, vier-, fünf- und/oder mehreckigen Querschnitt aufweisen. Die Querschnitte der Gestängeteile eines Teleskoparmes können jeweils die gleiche oder unterschiedliche Grundgeometrien aufweisen. Die Führungsnuten können in sämtlichen oder in einigen Eckbereichen und/oder in den mittleren Bereichen der Seitenwände der mehreckigen Gestängeteile angeordnet sein.

Vorzugsweise sind jeweils sämtliche der Führungsnuten der Gestängeteile mit Laufkugeln bestückt, gegebenenfalls auch nur jeweils einige der Führungsnuten. Vorzugsweise sind zumindest jeweils 2 im Wesentlichen gegenüberliegende Führungsnuten der jeweiligen Gestängeteile mit Laufkugeln bestückt.

Insbesondere können sich über im Wesentlichen dem gesamten Umfang der Gestängeteile die Innen- und Außenwandungen benachbarter Gestängeteile lediglich mit Ausnahme der Längsnuten zur Aufnahme der entsprechenden Kugeln einander bis auf einen Abstand annähern, der in etwa der Wandungsstärke der Gestängeteile entspricht bzw. diese unterschreitet oder über die zweibis dreifache Wandstärke nicht hinausgeht.

Die Kugelanordnungen der erfindungsgemäßen Teleskoparme können jeweils bei der Teleskopierbewegung gegenüber beiden, d. h. dem jeweils äußeren und dem inneren, Gestängeteil längsverschiebbar ausgebildet sein, so dass bei einer Verschiebung benachbarter Gestängeteile zueinander die Kugeln teilweise mitwandern. Die Kugeln bzw. Kugelanordnungen können jedoch auch gegenüber einem der Gestängeteile gegen Längsverschiebung gesichert oder ortsfest angeordnet sein.

Zur zusätzlichen Stabilisierung des Teleskoparmes können in Gestängelängsrichtung oberhalb und/oder unterhalb zumindest einer Kugelanordnung an zumindest einem Gestängeteil, vorzugsweise ober- und/oder unterhalb der Gesamtheit der Kugelanordnungen an dem jeweiligen Gestängeteil, Führungsteile angeordnet sein, die seitlich auf die Gestängeteile wirkende Kräfte zumindest nach geringer Abwinkelung der Gestängeteile zueinander auffangen. Die Führungsteile können somit einen gewissen lateralen Abstand zu dem korrespondierenden Gestängeteil aufweisen, so dass ohne oder nur bei geringer seitlicher Krafteinwirkung die Gestängeteile ausschließlich auf den entsprechenden Kugeln geführt werden. Die Führungsteile sind vorzugsweise jeweils im Endbereich der Gestängeteile, vorzugsweise die Endbereiche überkappend, angeordnet, sie können jedoch auch von den Endbereichen der Gestängeteile beabstandet sein. Der Vorschub benachbarter Gestängeteile zueinander kann durch die Führungsteile in einer oder in beiden Verschieberichtungen begrenzt werden, so dass auf separate Vorschubbegrenzungen verzichtet werden kann.

Besonders vorteilhaft ist es, wenn mindestens ein Führungsteil vorgesehen ist, dass mit einer Schnappverbindung an dem jeweiligen Gestängeteil festlegbar ist, wobei die Schnappverbindung in mindestens eine Ecke des als Mehreckprofil ausgebildeten Gestängeteils eingreift. Alternativ oder zusätzlich kann die Schnappverbindung auch im Bereich einer Längsnut an den jeweils benachbarten radial außenliegenden Gestängeteil festlegbar sein. Hierdurch ist jeweils die Schnappverbindung gut zugänglich und es steht ihr ausreichend Platz zur Verfügung. Insbesondere kann die jeweilige Längsnut im Eckbereich eines Mehreckprofils vorgesehen sein. Die Schnappverbindungen können aber auch an anderen geeigneten Stellen vorgesehen sein. Vorteilhafterweise ist an jeder der Ecken eines Mehreckprofils eine entsprechende Schnappverbindung vorgesehen. Bei anders profilierten Profilen, z.B. Rundprofilen, kann eine geeignete Anzahl an Schnappverbindungen vorgesehen sein. Die Schnappverbindungen können von der Gestängeaußenseite her betätigbar sein.

Das oben beschriebene Führungsteil kann zugleich als stirnseitige Nutbegrenzung ausgeführt sein, insbesondere können einer Nut zwei beabstandete Führungsteile zugeordnet sein, so dass eine oder mehrere Kugel zwischen den Führungsteilen unverlierbar angeordnet sind. Ferner kann die Kugelhalterung selber die Kugel(n) unverlierbar haltern, z.B. durch Bereitstellung eines Kugelkäfigs. Es kann jedoch alternativ auch einer oder mehrer der Nute(n), insbesondere der oder den von dem radial innersten Gestängeteil unmittelbar umgebenen, ein Kugelumlauf mit Kugelrückführung zugeordnet sein, so dass eine bei einer Teleskopbewegung aus einer Nut entfernte Kugel der Nut an einer anderen Stelle wieder zugeführt wird.

Die Halterungen der zwischen benachbarten Gelenkteilen geführten Kugeln können vielfältig ausgestaltet sein. Insbesondere können die Halterungen bei Bedarf an einem der Gelenkarme verschiebungssicher festgelegt sein, wenn dies erwünscht ist. Die Halterungen können auch über einen Teilbereich oder praktisch über die gesamte Länge der Gestängeteile im Wesentlichen frei verschiebbar sein.

Vorzugsweise weisen die Kugelhalterungen zumindest zwei oder mehr Haltebereiche auf, die lateral und/oder axial beabstandeten Kugelanordnungen zugeordnet sein können.

Besonders vorteilhaft ist es, wenn der oder die zwei oder mehr Haltebereiche einer Kugelhalterung durch eine Gelenkverbindung, insbesondere in Form eines Filmscharniers, miteinander oder mit einem Hauptkörper verbunden sind. Die Haltebereiche können so innerhalb des Teleskoparmes zueinander abgewinkelt sein, wobei aufgrund der Gelenkverbindung die Kugelhalterung im demontierten Zustand im Wesentlichen eben anordenbar ist, und in dieser Anordnung in einem Formgebungswerkzeug besonders einfach herstellbar ist. Verschiedene Teilbereiche der Kugelhalterung können hierbei auf unterschiedlicher Höhe zueinander liegen. Die Kugelhalterung kann insbesondere aus einem Kunststoffmaterial bestehen und durch ein geeignetes Herstellungsverfahren wie beispielsweise Spritzgussverfahren hergestellt sein.

Die Kugelhalterungen können bei mehreckigen Gestängeteilen eine Seitenfläche derselben überspannen und die Kugeln gemeinsam haltern, die in Umfangsrichtung benachbarter Führungsnute angeordnet sind. Vorzugsweise überspannen die Kugelhalterungen nur jeweils eine Seitenfläche mehreckig profilierter Gestängeteile, besonders bevorzugt jeweils einander gegenüberliegende Seitenflächen eines Gestängeteils, wobei die Kugelhalterungen des jeweils unmittelbar weiter radial innen oder außen angeordneten Gestängeteils auf Lücke zu den erstgenannten Kugelhalterungen angeordnet sein können. Ferner können bei dieser Anordnung an mindestens einer Nut, vorzugsweise an allen Nuten, mehrere axial übereinander angeordnete Kugeln vorgesehen sein. Vorzugsweise sind die Kugeln in lateraler und/oder axialer zu Gruppen von zwei oder mehreren Kugeln zusammengefasst.

Sind drei oder mehr Gestängeteile vorgesehen, so können die Kugelhalterungen für in radialer Richtung aufeinander folgende Gestängepaare baugleich oder unterschiedlich ausgeführt sein.

Überbrücken die Kugelhalterungen die Nutbereiche von zwei oder mehr Profilecken bzw. lateral beabstandeten Nutanordnungen, die vorzugsweise benachbart zueinander sind, so können die Kugelhalterungen für paarweise aufeinander folgende Gestängeteile jeweils kongruent oder in Umfangsrichtung versetzt zueinander angeordnet sein. Durch eine versetzte Anordnung wird eine besonders platzsparende Anordnung und damit maximale Querschnitte der Gestängeteile ermöglicht. Vorteilhafterweise sind die Kugelhalterungen auf einander gegenüberliegenden Seiten der Gestängeteile vorgesehen.

Die Erfindung wird nachfolgend beispielhaft beschrieben und anhand der Figuren beispielhaft erläutert. Es zeigen:
- Fig. 1: einen Querschnitt auf einen erfindungsgemäßen Teleskoparm im zusammengeschobenen Zustand im Querschnitt,
- Fig. 2: einen Teleskoparm nach Fig. 1 im teilweise auseinandergezogenen Zustand in perspektivischer Ansicht,
- Fig. 3: einen Teleskoparm nach Fig. 2 mit Führungsteilen,
- Fig. 4: einen Teleskoparm nach Fig. 1 mit Kugelhalterungen im Querschnitt,
- Fig. 5: eine Detailansicht des mittleren Gestängeteils nach Fig. 2 mit Kugelhalterung,
- Fig. 6: eine Detailansicht des inneren Gestängeteils nach Fig. 2 mit Kugelhalterung.
- Fig. 7: einen Ausschnitt eines Teleskoparmes einer alternativen Ausführungsform.

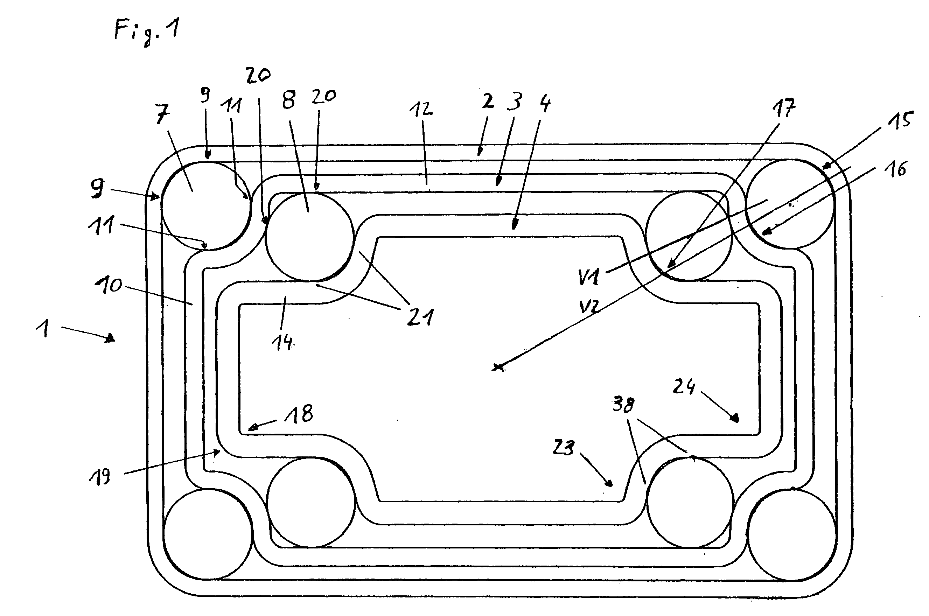

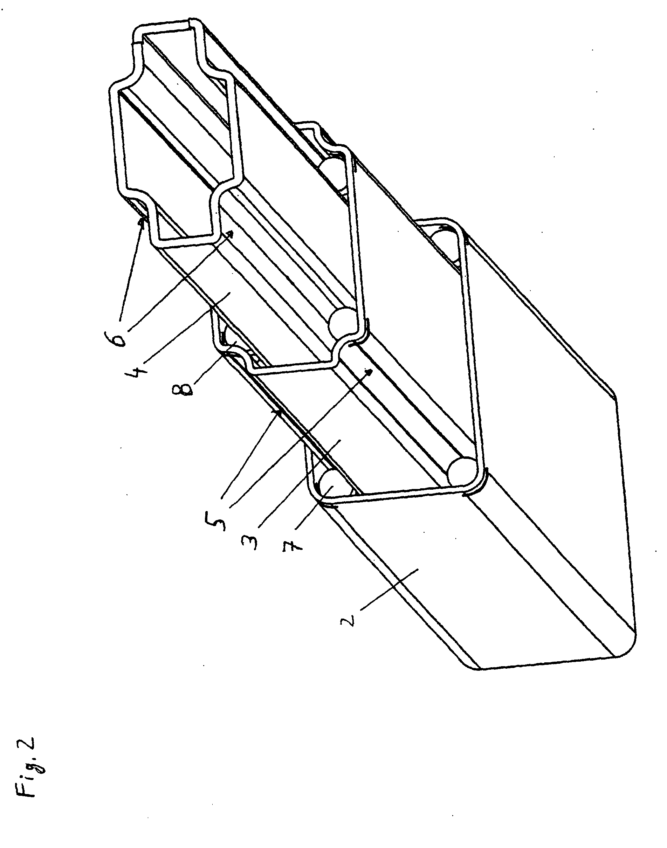

Der Teleskoparm 1 nach dem in den Figuren 1 bis 6 gezeigten Ausführungsbeispiel besteht aus drei zueinander teleskopierbaren Gestängeteilen 2, 3, 4, die jeweils einen im Wesentlichen rechteckigen Querschnitt aufweisen. Die radial außenliegenden Gestängeteile 2 und 3 weisen die etwa oder genau gleiche Wandstärke auf, das innenliegende Gestängeteil 4 eine um ca. 50 % höhere. Die inneren Gestängeteile 3 und 4 weisen in ihren Eckbereichen nach außen geöffnete und in Längsrichtung der Gestängeteile verlaufende Führungsnute 5, 6 (siehe Fig. 2) auf, die der Aufnahme von Laufkugeln 7, 8 dienen und diese über einen Umfangswinkel von ca. 90 Grad (radial außenliegende Laufkugel 7) bzw. ca. 70 Grad (radial innenliegende Laufkugel 8) auf der jeweiligen Innenseite umgeben. Die Verbindungsachsen gegenüberliegender Kugellaufflächen schliessen einen Winkel von 70 Grad ein. Die Laufkugeln 7, 8 sind gegenüber beiden benachbarten Gestängeteilen (2 und 3 bzw. 3 und 4) in Gestängelängsrichtung bewegbar.

Die radial äußere Laufkugel 7 ist an dem außenliegenden Gestängeteil 2 an zwei über den Kugelumfang beabstandeter Laufflächen 9 geführt, die einen Winkel von ca. 90 Grad einschließen. Jede dieser Laufflächen ist auf der gegenüberliegenden Kugelseite eine Lauffläche an der entsprechenden Führungsnut vorgesehen. Die Lauffläche ist hierbei in etwa auf Höhe der benachbarten Seitenwand 10 des Gestängeteils 3, die die schmälere Seitenwand des Gestängeteils 3 bildet, angeordnet, so dass seitlich einwirkende Kräfte aufgefangen werden können. Entsprechendes gilt für die beiden anderen radial äußeren und inneren Kugellaufflächen 9 und 11, die einander bezüglich des Kugelmittelpunktes gegenüberliegen, wobei die Kugellauffläche 11 im Wesentlichen auf Höhe der Seitenfläche 12, in diesem Falle mit einem radialen Abstand von in etwa einer Wandstärke derselben liegt.

Die Kugellaufflächen 9 und 11 sind jeweils in etwa oder genau auf Höhe der Wendepunkte bzw. Endpunkte der im Wesentlichen geradlinigen Abschnitte der benachbarten Seitenwände der Gestängeteile oder den zu diesen parallelen Bereichen 14 angeordnet.

Die Breite der Kugellaufflächen beträgt ca. 1 bis 2 mm bei einem Kugeldurchmesser von ca. 10 mm. Die Kugellaufflächen 9,11 und 20, 21 werden im Wesentlichen von den Kugeln selber bei der ersten Teleskopierbewegung der Gestängeteile zueinander in die Gestängeteile eingearbeitet, wobei in einem vorausgehenden Verfahrensschritt lediglich Laufrillen 38 (Fig. 1) in die Gestängeteile eingearbeitet wurden, deren Breite klein ist verglichen mit der Breite der endgültigen Kugellaufflächen, beispielsweise 1/3 bis 1/5 derselben oder weniger. Bei der ersten oder den ersten wenigen Teleskopierbewegungen werden somit unter Vorgabe der Kugellaufrichtung durch die vorgesehenen Laufrillen 38 die endgültigen Laufflächen ausgebildet.

Die Kugellaufflächen 20, 21 der radial innenliegenden Kugel, entsprechendes würde zumindest fakultativ auch für weiter radial innenliegende Kugeln gelten können sind bezogen auf das äußere Gestängeteil an einer Seitenwand 12 sowie an einer konkav gebogenen Nutrückseite angeordnet. Entsprechendes gilt für die radial innenliegenden Laufflächen der gleichen Kugel an dem inneren Gestängeteil, wobei anstelle der Seitenwand einen parallel zu dieser verlaufenden Abschnitt 14 mit einer Kugellauffläche versehen ist. Die Verbindungslinien radial beabstandeter Kugeln 7, 8, die jeweils unterschiedlichen Gestängeteilen zugeordnet sind, liegen hierbei auf einer Verbindungslinie, die nicht durch den geometrischen Mittelpunkt bzw. Schwerpunkt der Gestängeteile verläuft, die Verbindungslinie nach dem Ausführungsbeispiel schließt bezüglich der Seitenwand, an welcher die Kugeln anliegen, einen geringeren Winkel ein.

Das gleiche Konstruktionsprinzip ist auch bei drei, fünf oder mehreckigen oder gebogenen, beispielsweise runden, ovalen oder elliptischen Querschnittsprofilen anwendbar. Wäre somit ein weiteres inneres Gestängeteil vorzusehen, so würden die weiteren Kugeln vorzugsweise in dem Winkelbereich 23 angeordnet sein, wobei jedoch auch eine Anordnung in dem Winkelbereich 24 möglich wäre, wobei dann die Kugeln der Gestängeteile mit radialem Abstand nicht auf einer geraden oder im Wesentlichen geraden Linie liegen würden.

Nach dem Ausführungsbeispiel mit Gruppen von je zwei radial beabstandeten Kugeln 7,8 liegen drei Kugellaufflächen auf einer zumindest im Wesentlichen geraden Linie V1. Diese Linie verläuft nach dem Ausführungsbeispiel zwischen der Diagonalen und den Seitenwänden der Gestängeteile. Es können auch mehr als drei Kugellaufflächen auf einer Linie liegen, insbesondere wenn mehr als zwei radial innenliegenden Gestängeteile 3,4 vorgesehen sind. Die auf einer Linie liegenden Kugellaufflächen können jeweils die in radialer Richtung unmittelbar aufeinanderfolgenden sein, wie in dem Ausführungsbeispiel, es können gegebenenfalls auch zwischen diesen Kugellaufflächen vorgesehen sein, deren Lage wesentlich von der geraden Linie abweicht. Diese Abweichung kann auch für die jeweils am weitesten radial innen und/oder außen liegenden Kugellaufflächen gelten, vorzugsweise nur für diese. Die Abweichung der Kugellaufflächen von der geraden Linie beträgt nach dem Ausführungsbeispiel ca. ¼ bis 1/5 des Kugeldurchmessers oder weniger, ohne hierauf beschränkt zu sein.

Zwischen benachbarten Laufflächen, die einer Kugel zugeordnet sind, sind Gestängebereiche 15, 16, 17 mit geringfügig größerem radialen Abstand zu den Kugeln vorgesehen, so dass zwischen Kugel und dem Gestängebereich ein Spalt entsteht. Die Spalttiefe nach dem Ausführungsbeispiel beträgt ca. 0,1 bis 0,2 mm. Werden die Gestängeteile im Bereich der Kugelführungen deformiert, so können diese Bereiche 15 bis 17 die Kugel abstützen und zusätzliche Laufflächen ausbilden. Die Überlast-Widerlager sind vorzugsweise jeweils radial innenliegend zu der Kugel, gegebenenfalls alternativ oder zusätzlich auch radial außenliegend zu der Kugel angeordnet und liegen in etwa auf der Verbindungslinie V2 der jeweiligen Ecke des idealisierten Profils des Gestängeteils mit dessen Mittelpunkt. Die Abweichung von der Geraden beträgt vorzugsweise ¼ bis 1/5 oder weniger des Kugeldurchmessers, ohne hierauf beschränkt zu sein. Die genannte Abweichung kann für einen Teil oder für alle Überlastbereiche gelten.

Die Gestängeteile sind aus Blechmaterial durch ein Walzverfahren und anschließender Ausbildung einer in Gestängeteillängsrichtung verlaufenden Schweißnaht, die im Seitenbereich vorgesehen sein kann, hergestellt. Durch das Walzverfahren lassen sich die Nute besonders einfach einbringen, wobei die innenliegenden Umformwinkel 18 besonders scharf und die außenliegenden Umformwinkel 19 abgerundet hergestellt werden können. Gleichzeitig können hierdurch Kugelführungsnuten 5, 6 ausreichender Genauigkeit hergestellt werden.

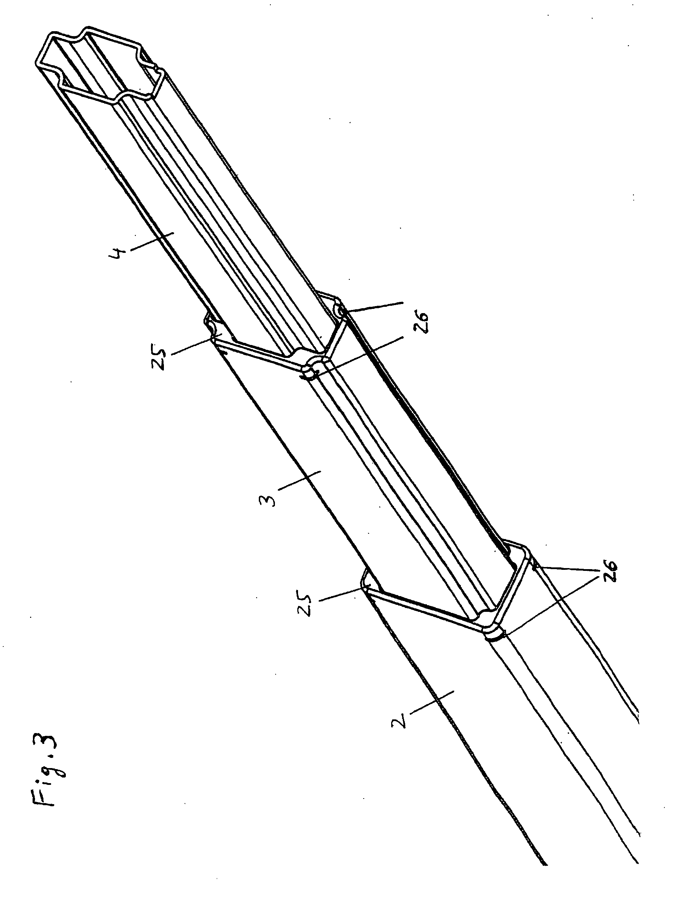

Fig. 3 zeigt einen Teleskoparm mit Führungsteilen 25, die stirnseitig auf den Gelenkteilen auf bzw. in diese eingesetzt und mittels in den Eckbereichen vorgesehenen Schnappverbindungen festlegbar sind. Die Schnappverbindungen sind über Schlitze in den Gelenkteilen von außen entarretierbar. Die Schnappzungen der Schnappverbindung sind hierbei auf Höhe der Kugelführungsnuten angeordnet, so dass die Schnappzungen ausreichend Spielraum haben. Dies ermöglicht eine einfache Befestigung der Führungsteile wenn die Innen- und Außenwände benachbarter Gelenkteile über praktisch den gesamten Umfang, im Wesentlichen nur mit Ausnahme der Bereiche der Kugelführungsnute, einen nur geringen Abstand haben, der im Wesentlichen im Bereich der Wandstärke der Gestängeteile, beispielsweise im Bereich der ein- bis zweifachen Wandstärke oder auch geringer, liegt.

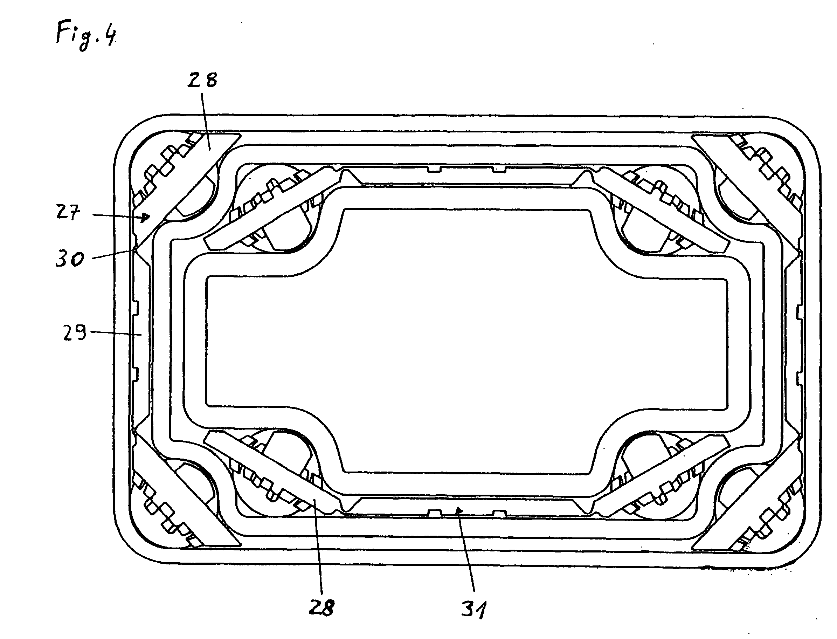

Fig. 4 zeigt zusätzlich zu Fig. 1 die Kugelhalterungen 27, die jeweils Kugelanordnungen benachbarter Eckbereiche der Gestängeteile gemeinsam haltern und hierzu die Seitenwände jeweils überbrücken. Die Kugelhalterungen weisen übliche Kugelkäfige 28 und mittlere Verbindungsstücke 29 auf, die jeweils über filmscharnierartige Gelenkverbindungen 30 miteinander verbunden sind. Im demontierten Zustand können somit die Kugelkäfige 29 im Wesentlichen in die Ebene des Verbindungsstücks 30 bzw. einer parallelen Ebene verschwenkt werden, wodurch die Herstellung der Kugelhalterungen, die aus einem Kunststoffmaterial bestehen können, wesentlich vereinfacht ist. Die Kugelhalterungen 27 und 31 sind jeweils paarweise gegenüberliegenden Seitenflächen der Gestängeteile 3 und 4 zugeordnet und jeweils um die Umfangsrichtung der Gestängeteile versetzt bzw. auf Lücke zueinander angeordnet. Es versteht sich, dass die Kugelhalterungen 27 bzw. 31, insbesondere auch im Falle anderer Querschnittsgeometrien der Gestängeteile, mehreren oder jeweils auch nur einer Führungsnut bzw. Führungsnutanordnung mit mehreren zueinander unmittelbar benachbarten Führungsnuten zugeordnet sein kann.

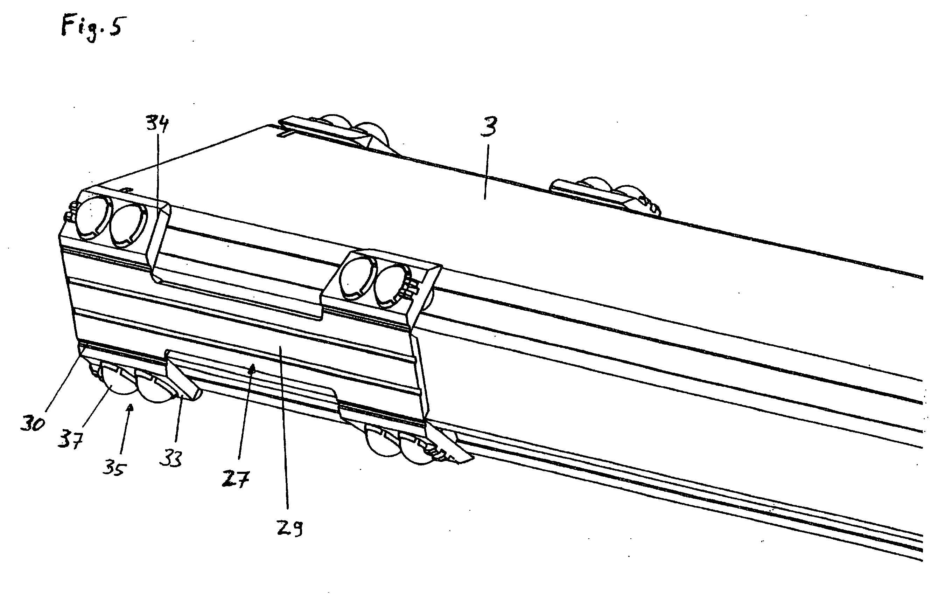

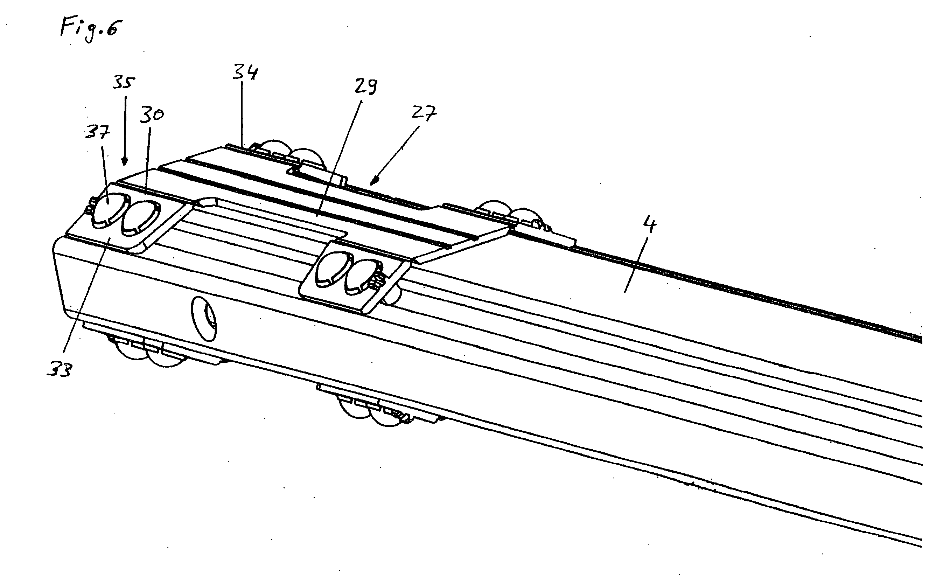

Die Figuren 5 und 6 zeigen die Gestängeteile 3, 4 mit den jeweiligen Kugelhalterungen 27, 31.

Die Kugelhalterungen 27 und 31 weisen jeweils axial voneinander beabstandete Haltbereiche 33 und 34 auf, die jeweils benachbarten Ecken der Mehreckprofile zugeordnet sind. Die Kugelanordnungen 35 weisen jeweils zwei axial beabstandete in Gestängeteillängsrichtung aufeinander folgende Kugeln 37 auf. Das Hautstück 29 erstreckt sich hierbei über eine größere axiale Länge der jeweiligen Gestängeteile, in etwa über die ein- bis zweifache Quererstreckung der längeren Querschnittsachse des inneren oder äußeren Gestängeteils. Die Haltebereiche 33 selber erstrecken sich hierbei lediglich etwas mehr über den jeweiligen Kugelumfang, so dass die axial und lateral beabstandeten Halterungsbereiche unabhängig voneinander gegenüber dem Verbindungsbereich 33 verschwenkbar sind.

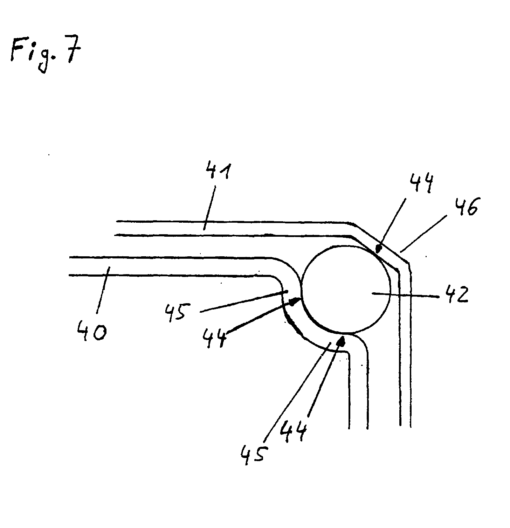

Figur 7 zeigt einen Ausschnitt eines Teleskoparmes, mit einem inneren und äußeren Gestängeteil 40, 41, wobei das innere Gestängeteil eine Führungsnut 42 aufweist und die Kugel 42 an einer Seitenwand 46 des äußeren Gestängeteils anliegt. Die Kugel 42 ist hier derart bemessen, dass sie in das innere Gestängeteil zwei und in das äußere Gestängeteil eine Laufrille 44 bei einer ersten Teleskopbewegung einprägt. Selbstverständlich können die Gestängeteile auch so geformt sein, dass die Kugel 42 von zwei Nutflanken einer Führungsnut des äußeren Gestängeteils und nur einer Seitenwand des inneren Gestängeteils umgeben ist, so dass in das äußere Gestängeteil zwei und in das innere Gestängeteil nur eine Führungsnut eingeprägt wird. In beiden Anordnungen werden jeweils in den Nuten Laufrillen 44 in gegenüberliegende Nutflanken 45 eingeprägt.

### Bezugszeichenliste

- 1: Teleskoparm
- 2: Gestängeteil
- 3: Gestängeteil
- 4: Gestängeteil
- 5: Führungsnut
- 6: Führungsnut
- 7: Laufkugel
- 8: Laufkugel
- 9: Lauffläche
- 10: Seitenfläche
- 11: Lauffläche
- 12: Seitenfläche
- 14: Wandbereich
- 15: Gestängebereich
- 16: Gestängebereich
- 17: Gestängebereich
- 18: Winkel
- 19: Winkel
- 20: Lauffläche
- 21: Lauffläche
- 23: Winkelbereich
- 24: Winkelbereich
- 25: Führungsteil
- 26: Schlitz
- 27: Kugelhalterung
- 28: Kugelkäfig
- 29: Verbindungsstück
- 30: Gelenkverbindung
- 31: Kugelhalterung
- 33: Haltebereich
- 34: Haltebereich
- 35: Kugelanordnung
- 37: Kugel
- 38: Laufrille
- 40: Gestängeteil
- 41: Gestängeteil
- 42: Kugel
- 44: Laufrille
- 45: Nutflanke
- 46: Seitenwand
- V1: Verbindungslinie
- V2: Verbindungslinie

## Patentansprüche

1. Teleskoparm mit einem äußeren und mindestens einem inneren zueinander teleskopierbaren Gestängeteil, wobei zumindest das äußere Gestängeteil (2) mindestens eine Kugelanordnung mit mindestens einer Kugel (7,8) umschließt, die als Rolllager zwischen dem äußeren und dem inneren Gestängeteil (2,3,4) bei einer Teleskopbewegung wirkt, wobei mindestens eine. Kugel (7,8) der Kugelanordnung bezogen auf ihre Sollposition in dem demontierten Zustand des Teleskoparmes (1) ein geringes Übermaß aufweist und durch zumindest die erste Teleskopbewegung zumindest eine bestimmungsgemäße Laufrille pro Kugel in eines der zueinander teleskopierbaren Gestängeteile einbringt, **dadurch gekennzeichnet, dass** die mindestens eine Kugel (7,8) in einer Längsnut eines inneren und/oder äußeren Gestängeteils (2,3,4) angeordnet ist und durch eine Teleskopbewegung zwei oder mehr lateral beabstandete Laufrillen (11,21) in die Längsnut zumindest eines der inneren und/oder äußeren Gestängeteile (2, 3, 4) ein prägt.

2. Teleskoparm nach Anspruch 1, **dadurch gekennzeichnet, dass** die Außenseite des inneren Gestängeteils (3,4) die mindestens eine Kugel (7) teilumfänglich umgibt und zwei oder mehr lateral beabstandete Laufrillen (11,21) für die mindestens eine Kugel (7,8) bereitstellt.

3. Teleskoparm nach Anspruch 1 oder 2, **dadurch gekennzeichnet, dass** die Innenseite des äußeren Gestängeteils (2) die mindestens eine Kugel (7) teilumfänglich umgibt und zwei oder mehr lateral beabstandete Laufrillen (9) für die mindestens eine Kugel (7) bereitstellt.

4. Teleskoparm nach einem der Ansprüche 1 bis 3, **dadurch gekennzeichnet, dass** an zumindest einem Gestängeteil (3,4) zwischen benachbarten Laufrillen (11,21) für eine zugeordnete Kugel (7,8) ein Bereich (16,17) mit einen Spalt zwischen der Kugel und dem Bereich bildendem größerem radialen Abstand zur kugel vorgesehen ist, der einen Überlastschutzes in Form eines Widerlagers für die Kugel darstellt.

5. Teleskoparm nach einem der Ansprüche 1 bis 4, **dadurch gekennzeichnet, dass** die lateral beabstandeten Laufrillen (11,21) einer Nut des radial inneren und/oder äußeren Gestängeteils (2,3,4) einen Winkelumfang der jeweils geführten Kugel (7,8) von ca. 50 Grad bis ca. 120 Grad einschließen.

6. Teleskoparm nach einem der Ansprüche 1 bis 5, **dadurch gekennzeichnet, dass** mindestens ein Gestängeteil (2,3,4) aus einem Blech oder Rohrstück in einem Walzverfahren gefertigt ist und die Nut (5,6) eine Einprägung des Bleches oder Rohrstückes darstellt.

7. Teleskoparm nach einem der Ansprüche 1 bis 6, **dadurch gekennzeichnet, dass** die Gestängeteile (2,3,4) jeweils zwei oder mehrere lateral und/oder axial beabstandete Führungsbereiche für mindestens eine gegebene Kugelanordnung aufweisen und dass die mindestens eine Kugelanordnung zwei oder mehrere in lateraler und/oder axialer Richtung beabstandete Kugeln aufweist oder zur Aufnahme zweier oder mehrerer in lateraler und/oder axialer Richtung beabstandeter Kugeln geeignet ist.

8. Teleskoparm nach einem der Ansprüche 1 bis 7, **dadurch gekennzeichnet, dass** die Kugel (7,8) in einer Längsnut des inneren oder äußeren Gestängeteils (3) mindestens zwei lateral beabstandete Laufrillen und in dem korrespondierenden anderen Gestängeteil mindestens eine Laufrille durch eine Teleskopierbewegung einprägt.

9. Teleskoparm nach einem der Ansprüche 1 bis 8, **dadurch gekennzeichnet, dass** Laufflächen (11,21) mit vorgearbeiteten Laufrillen (38) für die Kugeln vorgesehen sind, die bei bestehendem Übermaß der Kugel in demontiertem Zustand des Teleskoparmes vorgearbeitet sind.

10. Teleskoparm nach einem der Ansprüche 1 bis 9, **dadurch gekennzeichnet, dass** zumindest eines der inneren Gestängeteile (3,4) im Wesentlichen ein Mehreckprofil darstellt und die mindestens eine Längsnut (5,6) im Eckbereich des Profils vorgesehen ist.

11. Teleskoparm nach einem der Ansprüche 1 bis 10, **dadurch gekennzeichnet, dass** mindestens drei zueinander teleskopierbare Gestängeteile (2,3,4) vorgesehen sind, die zumindest teilweise im Nutbereich (5,6) als Hohlprofil ausgebildet sind und dass bei zumindest einem Gestängeteil (3) die Nutrückseite des Hohlprofils als Führung für eine weiter radial innenliegende Kugel (8) dient, die das Rolllager für das nächstbenachbarte radial innenliegende Gestängeteil (4) bildet.

12. Teleskoparm nach einem der Ansprüche 1 bis 11, **dadurch gekennzeichnet, dass** zumindest drei zueinander teleskopierbare Gestängeteile (2,3,4) vorgesehen sind, wobei in radialer Richtung aufeinanderfolgend zwei oder mehrere im Wesentlichen nutartige Kugelführungen (5,6) ausgebildet sind und dass die Verbindungsachse der Kugelmittelpunkte von in den Führungen geführter Kugeln (7,8) außerhalb des Mittelpunktes des Teleskoparmes liegt.

13. Teleskoparm nach einem der Ansprüche 1 bis 12, **dadurch gekennzeichnet, dass** zwei oder mehr zueinander teleskopierbare Gestängeteile (2,3,4) vorgesehen sind und dass zumindest paarweise der Außenquerschnitt eines jeweils innenliegenden Gestängeteils (3,4) im Wesentlichen dem Innenquerschnitt des jeweils äußeren Gestängeteils (2,3) entspricht.

14. Teleskoparm nach einem der Ansprüche 1 bis 13, **dadurch gekennzeichnet, dass** in Gestängelängsrichtung oberhalb und/oder unterhalb zumindest einer Kugelanordnung (35) an benachbarten Gestängeteilen (2,3,4) Führungsteile (25) angeordnet sind, die seitlich auf die Gestängeteile (2,3,4) wirkende Kräfte zumindest nach geringer Abwinkelung der Gestängeteile zueinander auffangen.

15. Teleskoparm nach Anspruch 14, **dadurch gekennzeichnet, dass** zumindest ein Führungsteil (25) vorgesehen ist, das mittels einer Schnappverbindung an dem zugeordneten Gestängeteil (2,3) festlegbar ist und in mindestens eine Ecke eines als Mehreckprofil ausgebildeten Gestängeteils (2,3) und/oder einen Nutbereich (5,6) eines Gestängeteils eingreift.

16. Teleskoparm nach einem der Ansprüche 1 bis 15, **dadurch gekennzeichnet, dass** mindestens eine Kugelhalterung (27) vorgesehen ist, die zumindest zwei Haltebereiche (33,34) aufweist, die axial und/oder lateral beabstandeten Kugelanordnungen (35) zugeordnet sind, und dass sich die Kugelhalterung (27) über eine Seitenwand eines zugeordneten Gestängeteils (3) erstreckt.

17. Teleskoparm nach einem der Ansprüche 1 bis 16, **dadurch gekennzeichnet, dass** an zumindest einem Gestängeteil (3) zumindest zwei Kugelhalterungen (27) mit Haltebereichen für Laufkugeln vorgesehen sind, die sich nur über einen Teilumfang des zugeordneten Gestängeteils (3) erstrecken und dass die Kugelhalterungen (27) an dem Gestängeteil (3) diametral gegenüberliegend angeordnet sind.

## Claims

1. A telescopic column with one outer and at least one inner rod element capable of telescoping relative to each other, where at least the outer rod element (2) surrounds at least one ball arrangement with at least one ball (7, 8) which acts as a rolling bearing between the outer and inner rod elements (2, 3, 4) during telescoping movement, whereby at least one ball (7, 8) of the ball arrangement displays a slight oversize referred to its target position in disassembled condition of the telescopic column (1) and, as a result of at least the first telescoping movement, impresses a running surface for each ball for the intended purpose in one of the rod elements capable of telescoping relative to each other, **characterised in that** the at least one ball (7, 8 ) is located in a longitudinal groove of an inner and/or outer rod element (2, 3, 4) and two or more laterally separated running surfaces (11, 21) are impressed in the longitudinal groove of at least one of the inner and/or outer rod elements (2, 3, 4) by means of a telescoping movement.

2. A telescopic column according to Claim 1,
**characterised in that** the outer side of the inner rod element (3, 4) surrounds part of the circumference of the at least one ball (7, 8) and provides at least two or more laterally separated running surfaces (11, 21) for the at least one ball (7, 8).

3. A telescopic column according to Claim 1 or 2,
**characterised in that** the inside of the outer rod element (2) surrounds part of the circumference of the at least one ball (7) and provides at least two or more laterally separated running surfaces (9) for the at least one ball (7).

4. A telescopic column according to one of Claims 1 to 3, **characterised in that** an area (16, 17) with a larger radial distance to the ball generating a slit between the ball and the area is provided on at least one rod element (3, 4) between adjacent running surfaces (11, 21) for an assigned ball (7, 8) constituting an overload protector in the form of an abutment for the ball.

5. A telescopic column according to one of Claims 1 to 4, **characterised in that** the laterally separated running surfaces (11, 21) of a groove of the radially inner and/or outer rod element(2, 3, 4) enclose an angular range of the respectively guided ball (7, 8) of approx. 50 degrees to approx. 120 degrees.

6. A telescopic column according to one of claims 1 to 5, **characterised in that** the at least one rod element (2, 3, 4) is manufactured from a metal sheet or a section of tubing by a rolling method and the groove (5, 6) is an impression made in the sheet or section of tubing.

7. A telescopic column according to one of claims 1 to 6, **characterised in that** the rod elements (2, 3, 4) each have two or more laterally and/or axially separated guide areas for at least one given ball arrangement and that the at least one ball arrangement displays two or more balls separated in the lateral and/or axial direction or is suitable for accommodating two or more balls separated in the lateral and/or axial direction.

8. A telescopic column according toone of Claims 1 to 7, **characterised in that** the ball (7, 8) impresses at least two laterally spaced running surfaces in a longitudinal groove of the inner or outer rod element (3) and at least one running surface in the corresponding other rod element of the inner and outer rod elements by means of a tescopic movement.

9. A telescopic column according to one of Claims 1 to 8, **characterised in that** the impressed running surfaces (11, 21) are provided with pre-machined running grooves (38) for the balls, where the grooves are pre-machined to the oversize of the ball existing in disassembled condition of the telescopic column.

10. A telescopic column according toone of Claims 1 to 9, **characterised in that** at least one of the inner rod elements (3, 4) essentially displays a polygonal profile and the at least one longitudinal groove (5, 6) is provided in the corner area of the profile.

11. A telescopic column according to one of Claims 1 to 10, **characterised in that** at least three rod elements (2, 3, 4) capable of telescoping relative to each other are provided, which are at least partially designed as hollow profiles in the groove area (5, 6) and **in that** the rear side of the groove of the hollow profile of at least one rod element (3) serves as a guide for a ball (8) lying radially further inwards, which forms the rolling bearing for the directly adjacent, radially inner rod element (4).

12. A telescopic column according to one of Claims 1 to 11, **characterised in that** at least three rod elements (2, 3, 4) capable of telescoping relative to each other are provided, where two or more essentially groove-like ball guides (5, 6) are formed consecutively in radial direction, and **in that** the connecting axis of the centre points of the balls (7, 8) guided in the guides lies outside the centre point of the telescopic column.

13. A telescopic column according to one of Claims 1 to 12, **characterised in that** two or more rod elements (2, 3, 4) capable of telescoping relative to each other are provided and **in that**, at least in pairs, the outer cross-section of an inner rod element (3, 4) essentially corresponds to the inner cross-section of the respective outer rod element (2, 3).

14. A telescopic column according to one of Claims 1 to 13, **characterised in that** guide elements (25) that absorb forces acting laterally on the rod elements (2, 3, 4), at least after slight angling of the rod elements relative to each other, are provided in the longitudinal direction of the rods (2, 3, 4), above and/or below at least one ball arrangement (35) on adjacent rod elements (2, 3, 4).

15. A telescopic column according to one of Claims 1 to 14, **characterised in that** at least one guide element (25) is provided that can be fixed in position on the assigned rod element (2, 3) by means of a snap-in connection and engages at least one corner of a rod element (2, 3) designed as a polygonal profile and/or a groove area (5, 6) of a rod element.

16. A telescopic column according to one of Claims 1 to 15 , **characterised in that** at least one ball retainer (27) is provided that displays at least two retaining areas (33, 34), which are assigned to axially and/or laterally separated balls or ball arrangements (35) and **in that** the ball retainer (27) extends over one side wall of an assigned rod element (3).

17. A telescopic column according to one of Claims 1 to 16, **characterised in that** at least one rod element (3) is provided with at least two ball retainers (27) with retaining areas for running balls which extend over only part of the circumference of the assigned rod element (3) and **in that** the ball retainers (27) are located in diametrically opposite positions on the rod element (3).

## Revendications

1. Bras télescopique avec une pièce de tringlerie extérieure et au moins une pièce de tringlerie intérieure s'emboîtant l'une dans l'autre, sachant qu'au moins la pièce de tringlerie extérieure (2) comprend au moins un système à billes avec au moins une bille (7, 8) qui fait office de roulement entre la pièce de tringlerie extérieure et la pièce de tringlerie intérieure (2, 3, 4) lors d'un mouvement télescopique, sachant qu'au moins une bille (7,8) du système à billes présente, par rapport à sa position théorique, le bras télescopique (1) démonté, une faible surmesure et met en oeuvre, de par au moins le premier mouvement télescopique, au moins un chemin de roulement approprié, par bille, dans une des pièces de tringlerie s'emboîtant l'une dans l'autre; **caractérisé en ce qu'**au moins une bille (7, 8) est placée dans une rainure longitudinale d'une pièce de tringlerie intérieure et/ou extérieure (2, 3, 4) et imprime, de par un mouvement télescopique, deux ou plusieurs chemins de roulement (11, 21), espacés latéralement, dans la rainure longitudinale d'au moins une des pièces de tringlerie intérieures et/ou extérieures (2, 3, 4).

2. Bras télescopique selon la revendication 1, **caractérisé en ce que** le côté extérieur de la pièce de tringlerie intérieure (3, 4) enveloppe partiellement au moins une bille (7) et présente deux ou plusieurs chemins de roulement (11, 21), espacés latéralement, pour au moins une bille (7, 8).

3. Bras télescopique selon la revendication 1 ou 2, **caractérisé en ce que** le côté intérieur de la pièce de tringlerie extérieure (2) enveloppe partiellement au moins une bille (7) et présente deux ou plusieurs chemins de roulement (9), espacés latéralement, pour au moins une bille (7).

4. Bras télescopique selon l'une quelconque des revendications 1 à 3, **caractérisé en ce qu'**il est prévu au niveau d'au moins une pièce de tringlerie (3, 4), entre des chemins de roulement adjacents (11, 21), une zone (16, 17) avec un espacement radial supérieur, par rapport à la bille, pour une bille correspondante (7, 8), formant une fente entre la bille et la zone et constituant une protection contre les surcharges en forme de contre-appui pour la bille.

5. Bras télescopique selon l'une quelconque des revendications 1 à 4, **caractérisé en ce que** les chemins de roulement (11, 21), espacés latéralement, d'une rainure de la pièce de tringlerie intérieure et/ou extérieure radiale (2, 3, 4) comprennent une étendue angulaire, d'environ 50 à 120 degrés approximativement, de la bille respectivement (7, 8) guidée.

6. Bras télescopique selon l'une quelconque des revendications 1 à 5, **caractérisé en ce qu'**au moins une pièce de tringlerie (2, 3, 4) est fabriquée à partir d'une tôle ou d'un tube à l'aide d'un procédé de laminage et **en ce que** la rainure (5, 6) constitue une empreinte de la tôle ou du tube.

7. Bras télescopique selon l'une quelconque des revendications 1 à 6, **caractérisé en ce que** les pièces de tringlerie (2, 3, 4) présentent respectivement deux ou plusieurs zones de guidage, espacées axialement et/ou latéralement, pour au moins un système à billes défini et **en ce qu'**un système à billes au moins présente deux ou plusieurs billes espacées dans le sens latéral et/ou axial ou est approprié pour loger deux ou plusieurs billes espacées dans le sens latéral et/ou axial.

8. Bras télescopique selon l'une quelconque des revendications 1 à 7, **caractérisé en ce que** la bille (7, 8) imprime, dans une rainure longitudinale de la pièce de tringlerie intérieure ou extérieure (3), au moins deux chemins de roulement espacés latéralement et imprime, dans l'autre pièce de tringlerie correspondante, au moins un chemin de roulement, de par un mouvement télescopique.

9. Bras télescopique selon l'une quelconque des revendications 1 à 8, **caractérisé en ce que** sont prévues, pour les billes, des surfaces de roulement (11, 21) avec des chemins de roulement (38) préfinis et ébauchés le bras télescopique démonté en cas de surmesure de la bille.

10. Bras télescopique selon l'une quelconque des revendications 1 à 9, **caractérisé en ce qu'**au moins une des pièces de tringlerie intérieures (3, 4) forme essentiellement un profilé polygonal et **en ce qu'**est prévue au moins une rainure longitudinale (5, 6) dans la zone d'angle du profilé.

11. Bras télescopique selon l'une quelconque des revendications 1 à 10, **caractérisé en ce que** sont prévues au moins trois pièces de tringlerie (2, 3, 4) s'emboîtant les unes dans les autres et conçues, au moins, en partie, dans la zone de rainure (5, 6) en tant que profilé creux, et **en ce que**, pour au moins une pièce de tringlerie (3), la face arrière de la rainure du profilé creux fait office de guidage pour une autre bille située à l'intérieur et de façon radiale (8) et formant le roulement pour la pièce de tringlerie (4) située à l'intérieur, radialement et juste à proximité.

12. Bras télescopique selon l'une quelconque des revendications 1 à 11, **caractérisé en ce que** sont prévues au moins trois pièces de tringlerie (2, 3, 4) s'emboîtant les unes dans les autres, sachant que, dans le sens radial, sont conçus de façon successive, deux ou plusieurs guidages de billes (5, 6) essentiellement de type rainure et **en ce que** l'axe de liaison des points centraux des billes (7, 8) guidées dans les guidages est situé à l'extérieur du point centrai du bras télescopique.

13. Bras télescopique selon l'une quelconque des revendications 1 à 12, **caractérisé en ce que** sont prévues deux ou plusieurs pièces de tringlerie (2, 3, 4) s'emboîtant les unes dans les autres et **en ce qu'**au moins, la section transversale extérieure d'une pièce de tringlerie située à l'intérieur (3, 4) correspond, couplée, essentiellement à la section transversale intérieure de l'autre pièce de tringlerie (2, 3) extérieure.

14. Bras télescopique selon l'une quelconque des revendications 1 à 13, **caractérisé en ce que** des pièces de guidage (25) recevant, les unes les autres, des forces agissant latéralement sur les pièces de tringlerie (2, 3, 4) et ce, au moins selon le cintrage, peu important, des pièces de tringlerie, sont disposées, dans le sens longitudinal de la tringlerie, au-dessus et/ou en dessous au moins d'un système à billes (35) et au niveau de pièces de tringlerie (2, 3, 4) voisines.

15. Bras télescopique selon la revendication 14, **caractérisé en ce qu'**il est au moins prévu une pièce de guidage (25) qui peut être fixée au moyen d'une liaison encliquetable au niveau de la pièce de tringlerie (2, 3) correspondante et qui s'encliquette au moins dans un angle d'une pièce de tringlerie (2, 3) conçue en tant que profilé polygonal et/ou dans une zone de rainure (5, 6) d'une pièce de tringlerie.

16. Bras télescopique selon l'une quelconque des revendications 1 à 15, **caractérisé en ce qu'**il est au moins prévu un porte-billes (27) qui présente au moins deux zones de maintien (33, 34) associées à des systèmes à billes (35) espacés de façon latérale et/ou axiale et **en ce que** le porte-billes (27) s'étend sur une paroi latérale d'une pièce de tringlerie (3) correspondante.

17. Bras télescopique selon l'une quelconque des revendications 1 à 16, **caractérisé en ce qu'**il est prévu, au niveau d'au moins une pièce de tringlerie (3), au moins deux porte-billes (27) avec des zones de maintien pour des billes de roulement qui s'étendent uniquement sur une partie de la pièce de tringlerie (3) correspondante et **en ce que** les porte-billes (27) sont disposés diamétralement les uns en face des autres au niveau de la pièce de tringlerie (3).
